# EUROPEAN PATENT APPLICATION

(11) **EP 4 693 206 A1**
(43) Date of publication of application: **11.02.2026**
(21) Application number: 24795537.0
(22) Date of filing: 07.02.2024
(51) Int. Cl.: G06T 17/05, B60W 40/02, G06T 7/70, G06V 10/40

(54) **THREE-DIMENSIONAL MAP CONSTRUCTION METHOD AND APPARATUS, STORAGE MEDIUM AND CHIP SYSTEM**

(30) Priority: 27.04.2023 CN 202310481620
(71) Applicant: Huawei Technologies Co., Ltd., Shenzhen, Guangdong 518129 (CN)
(72) Inventor: LUO, Wentao, Shenzhen, Guangdong 518129 (CN); LI, Xiaosong, Shenzhen, Guangdong 518129 (CN); WANG, Yaoyuan, Shenzhen, Guangdong 518129 (CN); ZHANG, Ziyang, Shenzhen, Guangdong 518129 (CN); ZHOU, Shunbo, Shenzhen, Guangdong 518129 (CN); HU, Gang, Shenzhen, Guangdong 518129 (CN)
(74) Representative: Thun, Clemens
(86) International application number: PCT/CN2024/076683
(87) International publication number: WO 2024/222149

(57) **Abstract**

Embodiments of this application provide a three-dimensional map construction method and apparatus, a storage medium, and a chip system, to resolve a current problem that efficiency of constructing a map is low due to vibration of a camera. This application proposes that image compensation processing is performed, based on a capturing time and event data captured by an event camera, on an image frame captured by an RGB camera, to eliminate a problem that an RGB image frame is blurry due to vibration, and improve efficiency of constructing a three-dimensional map and integrity of the map, so that high-precision, efficient, and fast mapping can still be performed in a high-frequency motion scenario.

## Description

### CROSS-REFERENCE TO RELATED APPLICATIONS

This application claims priority to Chinese Patent Application No. 202310481620.0, filed with the China National Intellectual Property Administration on April 27, 2023 and entitled "THREE-DIMENSIONAL MAP CONSTRUCTION METHOD AND APPARATUS, STORAGE MEDIUM, AND CHIP SYSTEM", which is incorporated herein by reference in its entirety.

### TECHNICAL FIELD

This application relates to the field of communication technologies, and in particular, to a three-dimensional map construction method and apparatus, a storage medium, and a chip system.

### BACKGROUND

In many technical fields of self-driving, map navigation, and mobile robots, constructing a three-dimensional map is a very important technical link. A technology for constructing the three-dimensional map refers to that an intelligent terminal (for example, a robot) fuses multi-sensor sensing information to construct a three-dimensional map in a current environment. In a conventional technology, a simultaneous localization and mapping (simultaneous localization and mapping, SLAM) technology is mainly used to construct the three-dimensional map. With wide application of the technology, a user has increasingly higher requirements for a speed and efficiency of constructing the three-dimensional map. Because a standard red, green, and blue (red green blue, RGB) camera is used in the conventional SLAM technology, motion blur is easily generated during high-speed motion, resulting in a failure. Therefore, a moving speed of an intelligent terminal needs to be limited, and high-speed mapping cannot be implemented.

### SUMMARY

This application provides a three-dimensional map construction method and apparatus, a storage medium, and a chip system, to resolve a problem that efficiency of constructing a three-dimensional map is affected because a currently captured RGB image frame is blurry due to motion of a device.

According to a first aspect, this application provides a three-dimensional map construction method. The method is used to construct a three-dimensional map in a specified scene, the method is applied to an electronic terminal, the electronic terminal is provided with an RGB camera and an event camera. The method includes: in a process in which the electronic terminal moves in a specified scene, obtaining a video stream captured by the RGB camera, where the video stream includes a plurality of image frames and an event data stream captured by the event camera, and the event data stream includes event data at a plurality of moments; separately performing image processing on the plurality of image frames in the video stream based on the event data stream captured by the event camera, to obtain a processed video stream; and constructing a three-dimensional map in the specified scene based on the processed video stream, where the image processing includes deblurring processing, deblurring processing on a first image frame is performed based on event data within a specified time range, the first image frame is any one of the plurality of image frames, and the specified time range includes a capturing time of the first image frame.

Based on the foregoing solution, this application proposes that deblurring processing is performed, based on a capturing time and event data captured by an event camera, on an RGB image frame captured by an RGB camera, to eliminate a problem of low mapping efficiency caused by blur of the RGB image frame due to motion of the electronic terminal. According to the solutions of this application, a high-precision three-dimensional map can still be efficiently constructed at a high speed when the electronic terminal moves at a high frequency.

In some embodiments, the deblurring processing on the first image frame includes: generating an event frame based on the event data within the specified time range, where the event frame includes a feature point used to describe an object in the specified scene; determining a location of the feature point of the object in the first image frame based on a first location that is of the feature point, of the object, included in the event frame and that is in the event frame; and deleting, based on the location of the feature point of the object in the first image frame, a feature point that is used to describe the object and that is at another location in the first image.

Based on the foregoing solution, when the deblurring processing is performed on the RGB image frame, a specific location of a feature point that is used to describe an object and that is in the RGB image frame may be determined based on the event data, and a feature point that is used to describe the object and that is at another location in the RGB image frame is deleted, so as to eliminate a problem that the RGB image frame is blurry due to motion of the electronic terminal.

In some embodiments, the image processing further includes exposure compensation processing; and the exposure compensation processing on the first image frame includes: determining, based on a location that is of a first area in the first image frame and that is in the first image frame, a second area at a corresponding location in the event frame, where the first area is an image area in which an exposure status is abnormal in the first image frame, and the event frame is generated based on the event data within the specified time range; and performing feature point compensation on the first area based on the feature point that is used to describe the object in the specified scene and that is included in the second area.

Based on the foregoing solution, this application proposes that exposure compensation processing may be performed on the RGB image frame based on the event data captured by the event camera, and a specific location of a feature point included in an area in which an exposure status is abnormal in the RGB image frame is determined based on an event frame generated based on the event data, so as to compensate for the feature point of the area in which an exposure status is abnormal in the RGB image frame. That is, a feature point is supplemented at a corresponding location in the RGB image frame based on a location of a feature point that is used to describe an object contour and that is included in the event frame, so that a clear image can still be obtained in an exposure environment to construct a three-dimensional map.

In some embodiments, before separately performing the image processing on the plurality of image frames in the video stream based on the event data stream captured by the event camera, the method further includes: determining a central point of a plurality of feature points included in the first image frame, and determining a central point of a plurality of feature points included in a second image frame, where the second image frame is a previous image frame of the first image frame in the video stream; determining an offset of the central point of the first image frame relative to the central point of the second image frame; and determining that the offset is greater than an offset threshold.

In some embodiments, the electronic terminal is further provided with an inertial measurement unit IMU, and before separately performing the image processing on the plurality of image frames in the video stream based on the event data stream captured by the event camera, the method further includes: obtaining an acceleration value and a linear velocity value that are in the moving process of the electronic terminal and that are captured by the IMU; and determining that the acceleration value exceeds an acceleration threshold, and determining that the linear velocity value exceeds a linear velocity threshold.

Based on the foregoing solution, this application proposes that before the deblurring processing is performed on the RGB image frame, it is first determined that the RGB image frame is blurry, to save processing resources of a device. This application provides two solutions for determining that the RGB image frame is blurry. In one manner, determining is performed based on distribution of feature points in the RGB image frame. If a central point offset of feature points in two consecutive image frames is excessively large, it may be determined that a later RGB image frame is blurry. An offset threshold used to determine an offset value may be determined based on a moving speed of the electronic terminal and a capturing frequency of an RGB image. In the other manner, a motion status of the electronic terminal is determined based on data captured by the IMU sensor. If it is determined that the motion status of the electronic terminal is abnormal, it may be determined that an RGB image frame captured at a corresponding moment is blurry.

In some embodiments, before performing the exposure compensation processing on the first image frame, the method further includes: obtaining luminance of the plurality of image frames included in the video stream; and calculating average luminance of image frames that are captured before the first image frame in the plurality of image frames, and determining that a difference between luminance of the first image frame and the average luminance is greater than a first luminance threshold; or determining that a difference between luminance of the first image frame and luminance of a second image frame is greater than a second luminance threshold, where the second image frame is a previous image frame of the first image frame in the video stream.

Based on the foregoing solution, this application proposes that before the exposure compensation processing is performed on the RGB image, it may be first determined that there is an exposure abnormality problem in the RGB image, to save resources of a device.

In some embodiments, constructing the three-dimensional map in the specified scene based on the processed video stream includes: determining at least two key frames from the plurality of image frames included in the processed video stream, where a time difference between capturing times of two adjacent key frames in the at least two key frames is greater than a time threshold, and a quantity of feature points included in any key frame is greater than a quantity threshold; and constructing the three-dimensional map based on the at least two key frames.

Based on the foregoing solution, this application proposes that when a three-dimensional map is constructed based on a processed video stream, at least two key frames may be identified from the video stream to construct the map, thereby improving efficiency of constructing the map.

In some embodiments, constructing the three-dimensional map based on the at least two key frames includes: determining three-dimensional coordinates of each pixel in a camera coordinate system based on grayscale information of each pixel in a first key frame, where the first key frame is any one of the at least two key frames; determining three-dimensional coordinates of each pixel in a world coordinate system based on coordinates of the electronic terminal in the world coordinate system at a first moment and the three-dimensional coordinates of each pixel in the camera coordinate system, where the first moment is a capturing time of the first key frame; and constructing the three-dimensional map in the scene based on three-dimensional coordinates of pixels included in the at least two key frames in the world coordinate system.

In some embodiments, determining the coordinates of the electronic terminal in the world coordinate system at the capturing time of the first key frame includes: performing feature matching on the first key frame and a second key frame, to determine a feature point that is used to describe a same object and that is included in the first key frame and the second key frame, where the second key frame is a previous key frame of the first key frame in the at least two key frames; determining, based on respective locations of the feature points that are used to describe the same object and that are in the first key frame and the second key frame, a moving distance that is from a capturing time of the second key frame to the capturing time of the first key frame and that is of the electronic terminal; and determining, based on coordinates of the electronic terminal in the world coordinate system at the capturing time of the second key frame and the moving distance, the coordinates of the electronic terminal in the world coordinate system at the capturing time of the first key frame.

According to a second aspect, this application provides a three-dimensional map construction apparatus, where the apparatus is configured to construct a three-dimensional map in a specified scene. The apparatus may be an electronic terminal, or may be used in an electronic terminal, for example, may be a component, for example, a processor, a processing chip, or a processing circuit in the electronic terminal. The apparatus includes: an obtaining unit, configured to: in a process in which the electronic terminal moves in a specified scene, obtain a video stream captured by an RGB camera and an event data stream captured by an event camera, where the video stream includes a plurality of image frames, and the event data stream includes event data at a plurality of moments; and a processing unit, configured to separately perform image processing on the plurality of image frames in the video stream based on the event data stream captured by the event camera, to obtain a processed video stream, where the image processing includes deblurring processing, deblurring processing on a first image frame is performed based on event data within a specified time range, the first image frame is any one of the plurality of image frames, and the specified time range includes a capturing time of the first image frame, where the processing unit is further configured to construct a three-dimensional map in the specified scene based on the processed video stream.

In some embodiments, the processing unit is specifically configured to: generate an event frame based on the event data within the specified time range, where the event frame includes a feature point used to describe an object in the specified scene; determine a location of the feature point of the object in the first image frame based on a first location that is of the feature point, of the object, included in the event frame and that is in the event frame; and delete, based on the location of the feature point of the object in the first image frame, a feature point that is used to describe the object and that is at another location in the first image.

In some embodiments, the image processing further includes exposure compensation processing; and the processing unit is further configured to: determine, based on a location that is of a first area in the first image frame and that is in the first image frame, a second area at a corresponding location in the event frame, where the first area is an image area in which an exposure status is abnormal in the first image frame, and the event frame is generated based on the event data within the specified time range; and perform feature point compensation on the first area based on the feature point that is used to describe the object in the specified scene and that is included in the second area.

In some embodiments, before separately performing the image processing on the plurality of image frames in the video stream based on the event data stream captured by the event camera, the processing unit is further configured to: determine a central point of a plurality of feature points included in the first image frame, and determine a central point of a plurality of feature points included in a second image frame, where the second image frame is a previous image frame of the first image frame in the video stream; determine an offset of the central point of the first image frame relative to the central point of the second image frame; and determine that the offset is greater than an offset threshold.

In some embodiments, the electronic terminal is further provided with an IMU, and before separately performing the image processing on the plurality of image frames in the video stream based on the event data stream captured by the event camera, the obtaining unit is further configured to obtain an acceleration value and a linear velocity value that are in the moving process of the electronic terminal and that are captured by the IMU; and the processing unit is further configured to: determine that the acceleration value exceeds an acceleration threshold, and determine that the linear velocity value exceeds a linear velocity threshold.

In some embodiments, before performing the exposure compensation processing on the first image frame, the obtaining unit is further configured to obtain luminance of the plurality of image frames included in the video stream; and the processing unit is further configured to: calculate average luminance of image frames that are captured before the first image frame in the plurality of image frames, and determine that a difference between luminance of the first image frame and the average luminance is greater than a first luminance threshold; or determine that a difference between luminance of the first image frame and luminance of a second image frame is greater than a second luminance threshold, where the second image frame is a previous image frame of the first image frame in the video stream.

**In** some embodiments, the processing unit is specifically configured to: determine at least two key frames from the plurality of image frames included in the processed video stream, where a time difference between capturing times of two adjacent key frames in the at least two key frames is greater than a time threshold, and a quantity of feature points included in any key frame is greater than a quantity threshold; and construct the three-dimensional map based on the at least two key frames.

**In** some embodiments, the processing unit is specifically configured to: determine three-dimensional coordinates of each pixel in a camera coordinate system based on grayscale information of each pixel in a first key frame, where the first key frame is any one of the at least two key frames; determine three-dimensional coordinates of each pixel in a world coordinate system based on coordinates of the electronic terminal in the world coordinate system at a first moment and the three-dimensional coordinates of each pixel in the camera coordinate system, where the first moment is a capturing time of the first key frame; and construct the three-dimensional map in the scene based on three-dimensional coordinates of pixels included in the at least two key frames in the world coordinate system.

**In** some embodiments, the processing unit is specifically configured to: perform feature matching on the first key frame and a second key frame, to determine a feature point that is used to describe a same object and that is included in the first key frame and the second key frame, where the second key frame is a previous key frame of the first key frame in the at least two key frames; determine, based on respective locations of the feature points that are used to describe the same object and that are in the first key frame and the second key frame, a moving distance that is from a capturing time of the second key frame to the capturing time of the first key frame and that is of the electronic terminal; and determine, based on coordinates of the electronic terminal in the world coordinate system at the capturing time of the second key frame and the moving distance, the coordinates of the electronic terminal in the world coordinate system at the capturing time of the first key frame.

According to a third aspect, this application provides another three-dimensional map construction apparatus, including a processor and a memory. The memory is configured to store a program, and the processor is configured to execute the program stored in the memory, so that the apparatus implements the method according to any possible design of the first aspect.

According to a fourth aspect, an embodiment of this application provides a computer-readable storage medium. The computer-readable storage medium stores program code. When the program code is run on a computer, the computer is enabled to perform the method according to any possible design of the first aspect.

According to a fifth aspect, an embodiment of this application provides a computer program product. When the computer program product runs on a computer, the computer is enabled to perform the method according to any possible design of the first aspect.

According to a sixth aspect, an embodiment of this application provides a chip system. The chip system includes a processor. The processor is coupled to a memory, and is configured to invoke a computer program or computer instructions stored in the memory, so that the processor performs the method according to any possible design of the first aspect.

According to a seventh aspect, an embodiment of this application provides a processor. The processor is configured to invoke a computer program or computer instructions stored in a memory, so that the processor performs the method according to any possible design of the first aspect.

Based on the implementations provided in the foregoing aspects, embodiments of this application may be further combined to provide more implementations.

For technical effect that can be achieved by any possible design of any one of the second aspect to the seventh aspect, refer to descriptions of technical effect that can be achieved by any possible design of the first aspect. Repeated parts are not described.

### BRIEF DESCRIPTION OF DRAWINGS

FIG. 1 is a diagram of an event frame determined based on DVS event data;
FIG. 2 is a schematic flowchart of a three-dimensional map construction method according to an embodiment of this application;
FIG. 3 is a diagram of a timestamp alignment process according to an embodiment of this application;
FIG. 4 is a diagram of an architecture of an electronic terminal according to an embodiment of this application;
FIG. 5 is a schematic flowchart of another three-dimensional map construction method according to an embodiment of this application;
FIG. 6 is a schematic flowchart of another three-dimensional map construction method according to an embodiment of this application;
FIG. 7 is an example block diagram of a three-dimensional map construction apparatus according to an embodiment of this application; and
FIG. 8 is an example block diagram of another three-dimensional map construction apparatus according to an embodiment of this application.

### DESCRIPTION OF EMBODIMENTS

The solutions of this application may be applied to scenarios such as real-time location and navigation of a movable electronic terminal in an autonomous moving process. The movable electronic terminal is, for example, a robot vacuum cleaner, a food delivery robot, an unmanned aerial vehicle, a delivery robot, a mobile car, a logistics car, or a self-driving vehicle. A specific type of the applicable movable electronic terminal is not limited in this application.

To facilitate understanding of solutions of this application, concepts and terms used in embodiments of this application are first briefly described.
(1) Dynamic vision sensor (dynamic vision sensor, DVS) camera: is also referred to as an event camera. The DVS camera captures a dynamic change in a scene in an event-driven mode. Different from a conventional RGB camera, the DVS camera does not have a concept of a "frame". When a real scene shot by the DVS camera changes, for example, when an object moves, the DVS camera generates some pixel-level outputs (that is, an event, where the event usually refers to a feature point of motion). One event specifically includes a capturing time, location information, and an event polarity. For example, one event may be represented as (t, x, y, p), where t is a capturing time, and (x, y) are coordinates of a feature point, and p is a polarity of the event. The polarity is used to describe whether a change of light intensity on a pixel reaches a threshold. Therefore, when the object shot by the DVS camera does not move, an output of the DVS camera is a black image. When the object shot by the DVS camera moves and luminance of a plurality of pixels changes, a pixel whose luminance change is displayed in an image output by the DVS camera may describe a contour of the motion object. The image output by the DVS camera may be referred to as an event image frame or an event frame. For ease of description, the image is collectively referred to as an event frame subsequently. The DVS camera has advantages of no requirement for an illumination condition, a low delay, and sensitivity to small and fast motion.
(2) Inertial measurement unit (inertial measurement unit, IMU): is an apparatus used to measure a three-axis posture angle (or an angular rate) and an acceleration of an object. Generally, the IMU includes three single-axis angular velocity meters and three single-axis gyroscopes. The accelerometers are configured to detect acceleration signals of an object on three independent axes in a carrier coordinate system. The gyroscope is configured to: detect an angular velocity signal of a carrier relative to a navigation coordinate system, and measure information, for example, an angular velocity and an acceleration of the object in three-dimensional space, to determine a posture of the object.
(3) Loose coupling: is a multi-sensor fusion algorithm, and refers to that a plurality of sensors (for example, an IMU and a DVS camera) are used as two independent modules to respectively calculate results, and then respective results are fused to obtain a final location result or pose result (fusion may be performed according to a weighted average fusion algorithm or the like).
(4) Oriented fast and rotated brief (oriented fast and rotated brief, ORB): is a fast and stable feature point detection and extraction algorithm, and is widely applied to image feature extraction.

A fast mapping technology refers to that a robot fuses multi-sensor sensing information, and completes a mapping task in an unknown environment at a fast speed. This technology has wide application requirements in many fields of mobile robots, self-driving, map navigation, and the like. Currently, in the conventional technology, construction of a three-dimensional map is mainly implemented by using an SLAM technology. The SLAM technology may be understood as follows: A moving electronic terminal starts from an unknown location in an unknown environment, and in a moving process, performs self-location based on location estimation and a map, and constructs an incremental map based on self-location, to implement autonomous location and navigation of the electronic terminal in the moving process. However, because a standard RGB camera is used in the traditional SLAM technology, motion blur is easily generated during high-speed motion, resulting in a failure. Therefore, when the SLAM technology is used, a moving speed of the moving electronic terminal is limited to reduce vibration of the electronic terminal, and running robustness is ensured via a relocation function. However, for the relocation function, the electronic terminal is required to return to an original path to search for global location. However, this also limits a speed and efficiency of performing mapping by the electronic terminal.

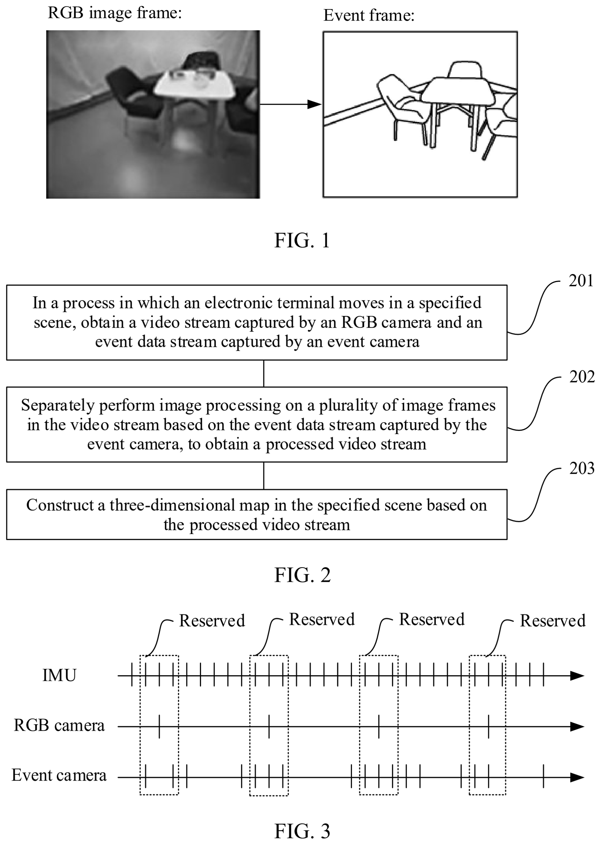

To resolve the foregoing problem, a related technology further proposes an SLAM algorithm implemented by fusing data of an RGB camera and data of an IMU, that is, a visual-inertial odometry, and a DVS camera-based SLAM algorithm, that is, an event-based visual odometry (event based visual odometry, EVO). The visual-inertial odometry solution can restore scale information of the camera, and maintain location accuracy in a short time when the camera fails due to blur. However, it is still a challenge to maintain accuracy and integrity of mapping when the camera fails due to blur for a long time. In the EVO algorithm, event data is used as an input, frame compression processing is performed on event data within a specified time range to obtain frame data with a same size as a common RGB image frame, and then feature extraction and pose estimation are performed based on the frame data. For example, FIG. 1 is a diagram of an event frame determined based on DVS event data. It can be learned that, a motion edge of an object is merely captured in the event frame, and there is a small quantity of textures, and therefore it is difficult to generate a high definition map. A sparse point cloud of an edge contour of an object in an environment in which the DVS camera performs inputting cannot be directly applied to existing navigation or self-driving, and cannot be used to generate a high-precision three-dimensional map. Therefore, how to use a multi-sensor fusion technology to implement fast location and mapping becomes an urgent problem to be resolved.

This application provides a three-dimensional map construction method. Compensation processing is performed on a corresponding RGB image frame based on a capturing time and event data captured by a DVS camera, to eliminate a problem that an RGB image frame is blurry due to motion of an electronic terminal, and improve efficiency of constructing a three-dimensional map and integrity of the map, so that high-precision, efficient, and fast mapping can still be performed in a high-frequency motion scenario.

The following describes a three-dimensional map construction solution provided in this application with reference to the accompanying drawings.

In a possible scenario, the solution of this application may be performed by a moving electronic terminal in a specified scene in which a three-dimensional map needs to be constructed. The electronic terminal is provided with an RGB camera and a DVS camera (for ease of description subsequently, the DVS camera is referred to as an event camera, and data captured by the event camera is referred to as event data). For example, the electronic terminal may be an unmanned aerial vehicle, a self-driving vehicle, or the like described in the foregoing embodiments, or the electronic terminal may be a device-to-device (device-to-device, D2D) terminal, a vehicle-to-everything (vehicle to everything, V2X) terminal, a machine-to-machine/machine type communication (machine-to-machine/machine-type communication, M2M/MTC) terminal, an internet of things (internet of things, IoT) terminal, a user terminal (user terminal), or the like that is provided with an RGB camera and an event camera. Alternatively, the electronic terminal may be a tablet computer or a computer with a wireless transceiving function that is provided with an RGB camera and an event camera. Alternatively, the electronic terminal may be a virtual reality (virtual reality, VR) terminal, an augmented reality (augmented reality, AR) terminal, a wireless terminal in industrial control, a wireless terminal in unmanned driving, a wireless terminal in telemedicine, a wireless terminal in a smart grid, a wireless terminal in a smart city (smart city), a wireless terminal in a smart home (smart home), or the like that is provided with an RGB camera and an event camera.

In another possible scenario, the solution of this application may also be performed by a specific component in an electronic terminal, for example, may be performed by a processor, a processing chip, or a circuit system in the electronic terminal. For an example of the electronic terminal, refer to the foregoing description. A component that is in the electronic terminal and that is configured to perform the solution of this application may obtain captured data from an RGB camera and an event camera that are disposed in the electronic terminal, and implement the solutions of this application based on the obtained data, to construct a three-dimensional map.

In still another possible scenario, the solution of this application may be further performed by a system including a cloud server and an electronic terminal. For example, an RGB camera and an event camera are deployed in the electronic terminal included in the system, and the electronic terminal has a communication module configured to communicate with the cloud server. The electronic terminal may obtain data captured by the RGB camera and data captured by the event camera, and send the captured data to the cloud server. The cloud server in the system may include a processor, a memory, a network interface card, and a hard disk. The processor, the memory, the network interface card, and the hard disk are connected through a bus. The network interface card is configured to receive data from the electronic terminal, and the processor and the memory are configured to provide a computing resource. Specifically, the processor may be a central processing unit (central processing unit, CPU), configured to process data from the electronic terminal, to generate a three-dimensional map in a scene. The hard disk is configured to provide a storage resource, for example, store a three-dimensional map generated by the processor. The hard disk may be a magnetic disk or another type of storage medium, for example, a solid-state drive or a shingled magnetic recording hard disk. The network interface card is configured to communicate with another application first storage device.

Certainly, the foregoing execution manner is merely used as an example. A specific execution body of the solution is not limited in this application. For ease of description, an example in which the electronic terminal is used as an execution body is used for description subsequently. The following specifically describes the solutions of this application. FIG. 2 is a schematic flowchart of a three-dimensional map construction method according to an embodiment of this application. The method specifically includes the following steps.

201: In a process in which an electronic terminal moves in a specified scene, obtain a video stream captured by an RGB camera and an event data stream captured by an event camera.

The video stream captured by the RGB camera includes a plurality of image frames.

202: Separately perform image processing on the plurality of image frames in the video stream based on the event data stream captured by the event camera, to obtain a processed video stream.

The image processing includes deblurring processing, that is, the deblurring processing is performed, based on the event data stream, on the image frame captured by the RGB camera. For example, a first image frame in the plurality of image frames is used as an example. Event data within a specified time range may be obtained, and deblurring processing is performed on the first image frame based on the obtained event data, to determine a specific location of a feature point in the first image frame. The specified time range includes a capturing time of the first image frame. For example, deblurring processing may be performed, based on event data captured within 1s to 10s, on an RGB image frame captured at a 5^{th} second.

203: Construct a three-dimensional map in the specified scene based on the processed video stream.

Based on the foregoing solution, this application proposes that compensation processing is performed, based on a capturing time and event data captured by an event camera, on an image frame captured by an RGB camera, and a specific location of a feature point that is used to describe an object and that is in an RGB image frame is determined based on the event data, to eliminate a problem that the RGB image frame is blurry due to motion of the electronic terminal. According to the solutions of this application, a high-precision three-dimensional map can still be efficiently constructed at a high speed when the electronic terminal moves at a high frequency.

In some scenarios, before performing the deblurring processing on the RGB image frame based on the event data, the electronic terminal may first determine whether the RGB image frame is blurry, and after determining that the RGB image frame is blurry, perform deblurring on the RGB image frame based on the event data. For example, the electronic terminal may determine, in the following Embodiment 1 and Embodiment 2, whether the RGB image frame is blurry.

Embodiment 1: The electronic terminal may determine, based on an offset of distribution of feature points in two consecutive image frames in the video stream, whether there is a blur problem. For example, the first image frame in the video stream is still used as an example. The electronic terminal may perform feature extraction on the first image frame and a previous image frame of the first image frame. For ease of description, the previous image frame of the first image frame in the video stream is subsequently referred to as a second image frame for short. It should be noted that an algorithm used by the electronic terminal to perform feature extraction on the first image frame and the second image frame is not limited in this application. For example, an ORB feature extraction operator may be used, or a features from accelerated segment test (features from accelerated segment test, FAST) algorithm, a scale-invariant feature transform (scale-invariant feature transform, SIFT) algorithm, or a seeded up robust features (seeded up robust features, SURF) extraction algorithm may be used. Optionally, after extracting the feature points in the first image frame and the second image frame, the electronic terminal may determine a central point of each feature point in the first image frame, and determine a central point of each feature point in the second image frame. Further, an offset of the central point of the first image frame relative to the central point of the second image frame may be determined based on location coordinates of the central point of the first image frame and location coordinates of the central point of the second image frame. For example, if the coordinates of the central point of the first image frame obtained through calculation are (2, 5), and the coordinates of the central point of the second image frame are (2, 20), it may be determined that the offset of the central point of the first image frame relative to the central point of the second image frame is 15. Further, the electronic terminal may determine whether the offset of the central point of the first image frame is greater than an offset threshold. If the offset is greater than the offset threshold, it indicates that the first image frame is blurry because a motion status of the electronic terminal is unstable at a capturing time of the first image frame. If the offset is not greater than the offset threshold, it indicates that a motion status of the electronic terminal is stable at a capturing time of the first image frame, and the first image frame is not blurry, and deblurring processing does not need to be performed.

The offset threshold may be determined based on a moving speed of the electronic terminal. For example, a distance that the electronic terminal can move between the two consecutive RGB image frames may be determined based on the moving speed of the electronic terminal and a capturing frequency of the RGB image frame, and the offset threshold needs to be set to be greater than the distance.

Embodiment 2: The electronic terminal may determine, based on motion of the electronic terminal, whether the RGB image frame is blurry. For example, the electronic terminal may be further provided with an IMU, configured to capture motion parameters such as a linear velocity and an acceleration in a moving process of the electronic terminal. Determining whether the first image frame is blurry is still used as an example. The electronic terminal may obtain an acceleration value and a linear velocity value that are of the electronic terminal and that are captured by the IMU within a time range A. The time range A includes a capturing time of the first image frame. Further, the electronic terminal may determine whether the obtained acceleration value exceeds an acceleration threshold, and determine whether the obtained linear velocity value exceeds a linear velocity threshold. If the acceleration value exceeds the acceleration threshold, and the linear velocity value exceeds the linear velocity threshold, it may indicate that a motion status of the electronic terminal is unstable at the capturing time of the first image frame, and consequently the first image frame is blurry, and deblurring processing needs to be performed based on the event data. Otherwise, deblurring processing is not required to be performed.

It should be noted that the foregoing Embodiment 1 and Embodiment 2 may be separately implemented as two separate embodiments, or may be implemented in combination. This is not limited in this application. Optionally, before the foregoing Embodiment 2 is performed, timestamp alignment may be first further performed on data of the IMU, the event data, and the RGB image frame based on capturing frequencies of the IMU, the RGB camera, and the event camera. For example, a device with a lowest capturing frequency may be used as a reference device, under each capturing timestamp of the reference device, a capturing timestamp that is closest to the capturing timestamp and that is of another capturing device is determined, to be aligned with a sampling timestamp of the reference device, and data captured at some unaligned timestamps is deleted, to form a multi-mode signal of a captured object at the capturing frequency of the reference device. This can improve efficiency of determining and compensating for the RGB image frame. For example, FIG. 3 is a diagram of a timestamp alignment process according to an embodiment of this application.

In some embodiments, after determining that a first image frame is blurry, an electronic terminal may perform deblurring processing on the first image frame based on event data within a specified time range. For example, in a specific implementation process, the electronic terminal may generate an event frame based on the event data within the specified time range. The event frame includes a feature point used to describe an object in a specified scene. It should be noted that the feature point in the event frame is different from the feature point in the first image frame, the feature point in the event frame includes only contour information and location information of the object, and the feature point in the first image frame further includes information such as RGB of the object. Further, the electronic terminal may determine a location of the feature point of the object in the first image frame based on a first location that is of the feature point, of the object, included in the event frame and that is in the event frame. For example, the electronic terminal determines that location coordinates of a feature point A used to describe an object in the event frame are (2, 4). Correspondingly, the electronic terminal may determine that location coordinates of the feature point A in the first image frame are also (2, 4). Still further, the electronic terminal may delete, based on the determined location of the feature point used to describe the object in the first image frame, a feature point that is used to describe the object and that is at another location in the first image frame. The foregoing example is still used. It is assumed that, because the first image frame is blurry, a plurality of feature points A used to describe an object may be included, and the plurality of feature points A are located at different locations in the first image frame, after determining, based on the event frame, that the location coordinates of the feature point A are (2, 4), the electronic terminal may delete a feature point A other than the feature point A at the coordinates (2, 4) in the plurality of feature points A included in the first image frame, to implement deblurring processing on the first image frame.

The traditional RGB camera is sensitive to ambient light. Once an exposure problem occurs, an image captured by the RGB camera may be greatly affected. Especially, when mapping is performed in an outdoor scenario, ambient light is mainly sunlight. In a moving process of the electronic terminal, overexposure or underexposure is likely to occur due to backlight or a strong light source. As a result, a part of the captured image is black or a part of the captured images is white. To resolve this problem, this application proposes that exposure compensation processing may be performed on an RGB image frame based on a capturing time and event data. In some embodiments, the electronic terminal may generate an event frame based on event data within a specific time range, and compensate, based on a feature point included in the event frame, a feature point included in the RGB image frame. For example, the first image frame in the video stream is still used as an example to describe a process in which the electronic terminal performs exposure compensation processing on the first image frame.

For example, the electronic terminal may determine, based on a location that is of a first area in the first image frame and that is in the first image frame, a second area at a corresponding location in the event frame. The first area is an area in which an exposure status is abnormal in the first image frame. The electronic terminal may determine, by comparing luminance of pixels in the first image frame, the area in which an exposure status is abnormal in the first image frame. The abnormal exposure state may include overexposure or underexposure. Further, the electronic terminal may compensate, based on the feature point that is used to describe the object in the scene and that is included in the second area, the feature point included in the first area. For example, the electronic terminal may add, at a corresponding location of the first area based on location information of feature points included in the second area, a feature point used to describe contour information of the object. After the feature point is supplemented, the first area includes the contour information of the object. The electronic terminal may further determine, based on RGB information of an area in which an exposure status is not abnormal in the first image frame, RGB information that is of the object and that is included in the first area, to supplement the object in the first area. For example, because an exposure status is abnormal, a part of an image of an object A included in the first area is not successfully displayed. The electronic terminal may determine, based on a feature point included in the second area, contour information of the part of an image of an object A included in the first area, and then determine, based on RGB information of the other part of an image of an object A included in the first image frame, RGB information of the part of an image of an object A included in the first area, to supplement the part of an image of an object A included in the first area.

In some embodiments, before exposure compensation processing is performed on the RGB image frame, whether there is an exposure abnormality problem in the RGB image frame may be first determined based on comparison of luminance of a plurality of RGB image frames. For example, a luminance statistical histogram of the RGB image frame may be created and analyzed to determine an exposure status of the RGB image frame. In a possible implementation, the electronic terminal may obtain luminance of the first image frame and luminance of the second image frame, and determine whether a difference between the luminance of the first image frame and the luminance of the second image frame is greater than a first luminance threshold. If the difference is greater than the first luminance threshold, it indicates that an exposure status of the first image frame is abnormal; or if the difference is not greater than the first luminance threshold, it indicates that an exposure status of the first image frame is not abnormal. In another possible implementation, the electronic terminal may collect statistics on average luminance of at least one image frame that is before the first image frame and that is in the video stream, and determine whether a difference between the luminance of the first image frame and the average luminance is greater than a second luminance threshold. If the difference is greater than the second luminance threshold, it indicates that an exposure status of the first image frame is abnormal; or if the difference is not greater than the second luminance threshold, it indicates that an exposure status of the first image frame is not abnormal.

In some embodiments, after the video stream is processed by using the solution described in the foregoing embodiment, the three-dimensional map in the specified scene may be constructed based on the processed video stream. In an optional manner, at least two key frames may be identified from the video stream, and the three-dimensional map is constructed based on the identified at least two key frames. A condition for the key frame to meet may include: a quantity of feature points in the key frame is greater than a quantity threshold, and a time interval between any key frame and a previous key frame of the any key frame is greater than a time threshold. For example, when the three-dimensional map is constructed based on the identified key frame, the following step 1 to step 3 may be used for implementation.

Step 1: Determine three-dimensional coordinates of each pixel in an electronic terminal coordinate system based on grayscale information of each pixel in the first key frame.

The first key frame is any one of the at least two key frames. The electronic terminal coordinate system is a coordinate system in which the electronic terminal is used as an origin. The first key frame includes two-dimensional coordinates (x, y) of each pixel, to determine a coordinate z of each pixel based on the grayscale information of each pixel, thereby determining the three-dimensional coordinates of each pixel in the electronic terminal coordinate system.

Step 2: Determine world coordinates of each pixel based on world coordinates of the electronic terminal at a first moment and the three-dimensional coordinates of each pixel in the first key frame in the electronic terminal coordinate system.

The first moment is a capturing time of the first key frame.

Step 3: Construct the three-dimensional map based on world coordinates of pixels respectively included in the at least two key frames.

Optionally, when the foregoing step 2 is performed to determine the world coordinates of the electronic terminal at the first moment, there may be the following two cases:

### Case 1: The first key frame is an RGB image frame on which image processing is not performed.

In the case 1, at a capturing time of the first key frame, a motion status of the electronic terminal is normal, and the first key frame does not have an exposure status abnormality problem. For the case 1, the electronic terminal may directly perform feature matching on the first key frame and a second key frame, to determine a location of a feature point that is used to describe a same object and that is in the first key frame and the second key frame. The second key frame is a previous key frame of the first key frame. Feature matching may be implemented over a pre-trained neural network, for example, a convolutional neural network (convolutional neural network, CNN), or may be performed via a graphics processing unit (graphics processing unit, GPU), to improve efficiency of feature matching. Further, the electronic terminal may determine a moving distance between the first moment and a second moment based on the location of the feature point that is used to describe the same object and that is in the first key frame and the second key frame. The second moment is a capturing moment of the second key frame. Further, the world coordinates of the first key frame may be determined based on a world coordinate of the electronic terminal at the second moment and the determined distance.

### Case 2: The first key frame is an RGB image frame obtained through image processing.

In the case 2, at a capturing time of the first key frame, a motion status of the electronic terminal is abnormal or the first key frame has an exposure status abnormality problem. Therefore, the electronic terminal performs image processing on the first key frame based on event data corresponding to the first key frame. For the case 2, the electronic terminal may obtain an event frame generated based on the event data corresponding to the first key frame, and determine an optical flow relationship between the event frame and a previous event frame of the event frame according to an optical flow estimation algorithm (for example, a Lucas-Kanade optical flow estimation algorithm). Further, pose information of the electronic terminal at a capturing moment of the event frame may be determined according to the optical flow relationship. Optionally, a pre-trained optical flow estimation network, for example, a deep learning network like DeepFlow or DeepMatch, may be used for implementation, or a GPU may be used for execution, to improve a speed of pose estimation.

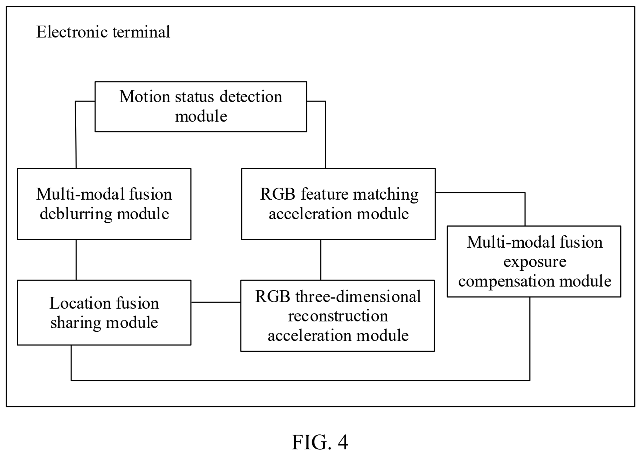

The solutions described in the foregoing embodiments may be executed by the electronic terminal, or may be executed by different processing modules of the electronic terminal. For example, FIG. 4 is a diagram of an architecture of an electronic terminal according to an embodiment of this application. As shown in FIG. 4, the electronic terminal may include a motion status detection module, an RGB feature matching acceleration module, a multi-modal fusion deblurring module, a multi-modal fusion exposure compensation module, a location fusion sharing module, and an RGB three-dimensional reconstruction acceleration module.

The motion status detection module is configured to determine a current motion status of the electronic terminal, and determine whether an RGB image frame is blurry. The RGB feature matching acceleration module is configured to perform feature matching on two adjacent RGB image frames. The multi-modal fusion deblurring module is configured to perform deblurring processing on an RGB image frame based on event data. The multi-modal fusion exposure compensation module is configured to perform exposure compensation processing on an RGB image frame based on event data. The location fusion sharing module is configured to locate the electronic terminal (refer to related descriptions of the foregoing case 1 and case 2). The RGB three-dimensional reconstruction acceleration module is configured to construct a three-dimensional map in a scene based on a key frame. It should be noted that the architecture shown in FIG. 4 is merely an example, and the modules are merely functional division performed on the electronic terminal, and are not used as a limitation on a structure of the electronic terminal.

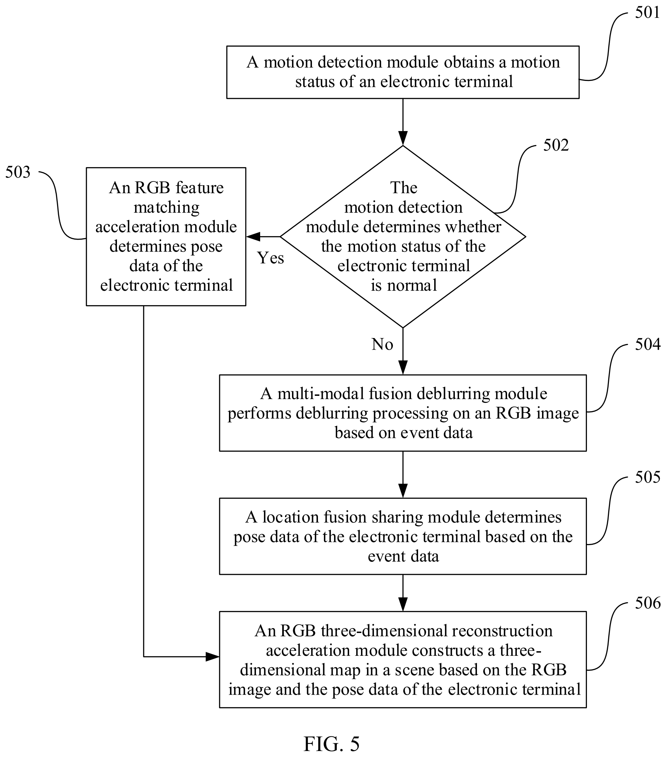

The following describes the solutions of this application in detail with reference to the architecture shown in FIG. 4. FIG. 5 is a schematic flowchart of a three-dimensional map construction method according to an embodiment of this application. The method specifically includes the following steps.

501: The motion detection module obtains a motion status of the electronic terminal.

502: The motion detection module determines whether the motion status of the electronic terminal is normal.

For example, for details, refer to related descriptions in Embodiment 1 and Embodiment 2. Details are not described herein again.

If yes, continue to perform step 503.

If no, continue to perform step 504.

503: The RGB feature matching acceleration module determines pose data of the electronic terminal.

504: The multi-modal fusion deblurring module performs deblurring processing on an RGB image based on event data.

505: The location fusion sharing module determines pose data of the electronic terminal based on the event data.

506: The RGB three-dimensional reconstruction acceleration module constructs a three-dimensional map in a scene based on the RGB image and the pose data of the electronic terminal.

It can be learned from the foregoing that this application proposes that, in the mapping process, whether the motion status of the electronic terminal is normal is determined based on the data captured by the sensor. If the motion status is normal, mapping and location are performed based on the image frame captured by the RGB camera. If the motion status is abnormal, mapping is performed based on both the data captured by the RGB camera and the data captured by the event camera, and location is performed on the electronic terminal in a loose coupling manner, to ensure continuity and robustness of mapping.

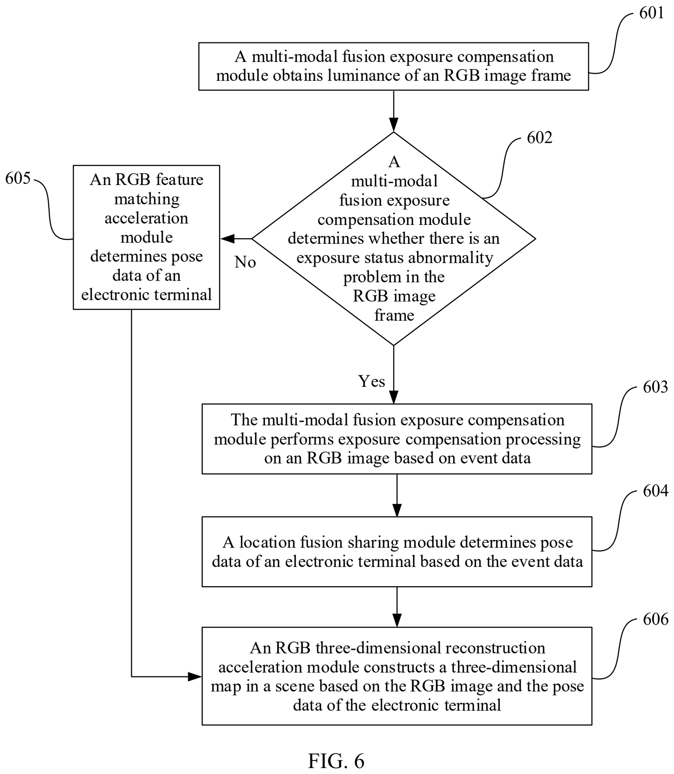

FIG. 6 is a schematic flowchart of another three-dimensional map construction method according to an embodiment of this application. The method specifically includes the following steps.

601: The multi-modal fusion exposure compensation module obtains luminance of an RGB image frame.

602: The multi-modal fusion exposure compensation module determines whether there is an exposure status abnormality problem in the RGB image frame.

If yes, continue to perform step 603.

If no, continue to perform step 605.

603: The multi-modal fusion exposure compensation module performs exposure compensation processing on an RGB image based on event data.

604: The location fusion sharing module determines pose data of an electronic terminal based on the event data.

605: The RGB feature matching acceleration module determines pose data of an electronic terminal.

606: The RGB three-dimensional reconstruction acceleration module constructs a three-dimensional map in a scene based on the RGB image and the pose data of the electronic terminal.

The following describes a three-dimensional map construction apparatus for implementing the foregoing methods in embodiments of this application with reference to the accompanying drawings. Therefore, all the foregoing content may be used in the following embodiments. Repeated content is not described again.

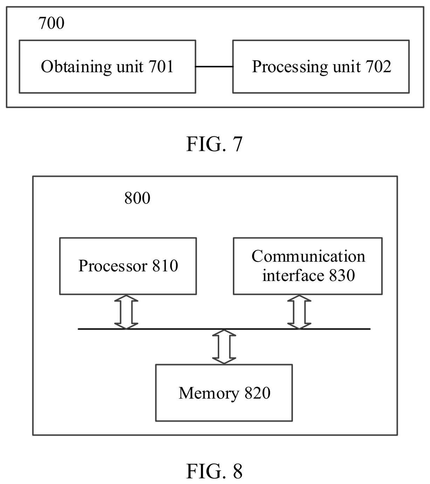

FIG. 7 is a block diagram of a three-dimensional map construction apparatus 700 according to an embodiment of this application. The apparatus 700 may correspondingly implement functions or steps implemented by an electronic terminal in the foregoing method embodiments. The three-dimensional map construction apparatus 700 may include an obtaining unit 701 and a processing unit 702. Optionally, a storage unit may be further included. The storage unit may be configured to store instructions (code or a program) and/or data. The obtaining unit 701 and the processing unit 702 may be coupled to the storage unit. For example, the processing unit 702 may read the instructions (the code or the program) and/or the data in the storage unit, to implement a corresponding method. The foregoing units may be independently disposed, or may be partially or completely integrated. For example, the processing unit 702 may include the modules in the architecture of the diagram shown in FIG. 4, that is, the processing unit 702 may implement functions of the modules shown in FIG. 4.

In some possible implementations, the three-dimensional map construction apparatus 700 can implement behavior and functions of the electronic terminal in the foregoing method embodiments. For example, the three-dimensional map construction apparatus 700 may be an electronic terminal, or may be a component (for example, a chip or a circuit) in the electronic terminal. The obtaining unit 701 is configured to perform the steps of obtaining data captured by an RGB camera, an event camera, and an IMU in the foregoing embodiments. For example, the obtaining unit 701 may be configured to perform the operations of obtaining a video stream captured by the RGB camera and obtaining an event data stream captured by the event camera in the embodiment shown in FIG. 2. The processing unit 702 may be configured to perform all operations, other than the operation of obtaining data, performed by the electronic terminal in the embodiment shown in FIG. 2, and/or configured to support another process of the technology described in this specification.

For example, the processing unit 702 may be configured to separately perform image processing on a plurality of image frames in the video stream based on the event data stream captured by the event camera, to obtain a processed video stream; and construct a three-dimensional map in a specified scene based on the processed video stream. The image processing includes deblurring processing, deblurring processing on a first image frame is performed based on event data within a specified time range, the first image frame is any one of the plurality of image frames, and the specified time range includes a capturing time of the first image frame.

For other operations performed by the obtaining unit 701 and the processing unit 702, refer to related descriptions in the foregoing method embodiments.

It should be noted that, in this embodiment of this application, division into the units is an example, and is merely a logical function division. During actual implementation, another division manner may be used. Functional units in embodiments of this application may be integrated into one processing unit 702, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in form of a software product. The computer software product is stored in a storage medium and includes several instructions for instructing a computer device (which may be a personal computer, a server, a network device) or a processor (processor) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

It should be understood that the processing unit 702 in this embodiment of this application may be implemented by a processor or a processor-related circuit component, and the obtaining unit 701 may be implemented through a data transmission interface. For example, the three-dimensional map construction apparatus in the foregoing embodiment may also use a form shown in FIG. 8. An apparatus 800 shown in FIG. 8 includes at least one processor 810 and a memory 820. Optionally, the apparatus 800 may further include a communication interface 830.

A specific connection medium between the processor 810 and the memory 820 is not limited in embodiments of this application. The processor 810 may be a general-purpose processor, a dedicated processor, or the like. For example, the processor may be a baseband processor or a central processing unit. The memory 820 stores computer-executable instructions, and the instructions may be run on the processor 810, so that the apparatus 800 performs the method described in the foregoing method embodiment. Optionally, the memory 820 may further store data. Optionally, the processor 810 may also store instructions and/or data. The processor and the memory may be separately disposed, or may be integrated.

It should be noted that, the processor 810 in embodiments of this application may be an integrated circuit chip, and has a signal processing capability. In an implementation process, the steps in the foregoing method embodiments can be implemented by using a hardware integrated logic circuit in the processor 810, or by using instructions in a form of software. The foregoing processor 810 may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory 820 in this embodiment of this application may be a volatile memory or a nonvolatile memory, or may include a volatile memory and a nonvolatile memory. The nonvolatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (RAM) that is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

An embodiment of this application further provides a computer storage medium. The computer storage medium stores a computer program. When the computer program is executed by a computer, the three-dimensional map construction method according to any one of the foregoing method embodiments is implemented.

An embodiment of this application further provides a computer program product. When the computer program product is executed by a computer, the three-dimensional map construction method according to any one of the foregoing method embodiments is implemented.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, all or a part of the procedures or functions according to embodiments of this application are generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, through a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

An embodiment of this application further provides a chip system. The chip system includes a processor. The processor is configured to invoke a computer program or computer instructions stored in a memory, so that the processor performs the method according to any one of the foregoing embodiments.

In a possible implementation, the processor is coupled to the memory through an interface.

In a possible implementation, the chip system further includes a memory. The memory stores a computer program or computer instructions.

An embodiment of this application further relates to a processor. The processor is configured to invoke a computer program or computer instructions stored in a memory, so that the processor performs the method according to any one of the foregoing embodiments.

It should be understood that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A three-dimensional map construction method, wherein the method is applied to an electronic terminal, the electronic terminal is provided with a red, green, and blue RGB camera and an event camera, and the method comprises:
in a process in which the electronic terminal moves in a specified scene, obtaining a video stream captured by the RGB camera, wherein the video stream comprises a plurality of image frames and an event data stream captured by the event camera, and the event data stream comprises event data at a plurality of moments;
separately performing image processing on the plurality of image frames in the video stream based on the event data stream captured by the event camera, to obtain a processed video stream, wherein
the image processing comprises deblurring processing, deblurring processing on a first image frame is performed based on event data within a specified time range, the first image frame is any one of the plurality of image frames, and the specified time range comprises a capturing time of the first image frame; and
constructing a three-dimensional map in the specified scene based on the processed video stream.

2. The method according to claim 1, wherein the deblurring processing on the first image frame comprises:
generating an event frame based on the event data within the specified time range, wherein the event frame comprises a feature point used to describe an object in the specified scene;
determining a location of the feature point of the object in the first image frame based on a first location that is of the feature point, of the object, comprised in the event frame and that is in the event frame; and
deleting, based on the location of the feature point of the object in the first image frame, a feature point that is used to describe the object and that is at another location in the first image.

3. The method according to claim 1 or 2, wherein the image processing further comprises exposure compensation processing; and the exposure compensation processing on the first image frame comprises:
determining, based on a location that is of a first area in the first image frame and that is in the first image frame, a second area at a corresponding location in the event frame, wherein the first area is an image area in which an exposure status is abnormal in the first image frame, and the event frame is generated based on the event data within the specified time range; and
performing feature point compensation on the first area based on the feature point that is used to describe the object in the specified scene and that is comprised in the second area.

4. The method according to any one of claims 1 to 3, wherein before separately performing the image processing on the plurality of image frames in the video stream based on the event data stream captured by the event camera, the method further comprises:
determining a central point of a plurality of feature points comprised in the first image frame, and determining a central point of a plurality of feature points comprised in a second image frame, wherein the second image frame is a previous image frame of the first image frame in the video stream;
determining an offset of the central point of the first image frame relative to the central point of the second image frame; and
determining that the offset is greater than an offset threshold.

5. The method according to any one of claims 1 to 4, wherein the electronic terminal is further provided with an inertial measurement unit IMU, and before separately performing the image processing on the plurality of image frames in the video stream based on the event data stream captured by the event camera, the method further comprises:
obtaining an acceleration value and a linear velocity value that are in the moving process of the electronic terminal and that are captured by the IMU; and
determining that the acceleration value exceeds an acceleration threshold, and determining that the linear velocity value exceeds a linear velocity threshold.

6. The method according to claim 3, wherein before performing the exposure compensation processing on the first image frame, the method further comprises:
obtaining luminance of the plurality of image frames comprised in the video stream; and
calculating average luminance of image frames that are captured before the first image frame in the plurality of image frames, and determining that a difference between luminance of the first image frame and the average luminance is greater than a first luminance threshold; or determining that a difference between luminance of the first image frame and luminance of a second image frame is greater than a second luminance threshold, wherein
the second image frame is a previous image frame of the first image frame in the video stream.

7. The method according to any one of claims 1 to 6, wherein constructing the three-dimensional map in the specified scene based on the processed video stream comprises:
determining at least two key frames from the plurality of image frames comprised in the processed video stream, wherein a time difference between capturing times of two adjacent key frames in the at least two key frames is greater than a time threshold, and a quantity of feature points comprised in any key frame is greater than a quantity threshold; and
constructing the three-dimensional map based on the at least two key frames.

8. A three-dimensional map construction apparatus, wherein the apparatus is used in an electronic terminal, or the apparatus is the electronic terminal, the electronic terminal is provided with an RGB camera and an event camera, and the apparatus comprises:
an obtaining unit, configured to: in a process in which the electronic terminal moves in a specified scene, obtain a video stream captured by the RGB camera and an event data stream captured by the event camera, wherein the video stream comprises a plurality of image frames, and the event data stream comprises event data at a plurality of moments; and
a processing unit, configured to separately perform image processing on the plurality of image frames in the video stream based on the event data stream captured by the event camera, to obtain a processed video stream, wherein the image processing comprises deblurring processing, deblurring processing on a first image frame is performed based on event data within a specified time range, the first image frame is any one of the plurality of image frames, and the specified time range comprises a capturing time of the first image frame, wherein
the processing unit is further configured to construct a three-dimensional map in the specified scene based on the processed video stream.

9. The apparatus according to claim 8, wherein the processing unit is specifically configured to:
generate an event frame based on the event data within the specified time range, wherein the event frame comprises a feature point used to describe an object in the specified scene;
determine a location of the feature point of the object in the first image frame based on a first location that is of the feature point, of the object, comprised in the event frame and that is in the event frame; and
delete, based on the location of the feature point of the object in the first image frame, a feature point that is used to describe the object and that is at another location in the first image.

10. The apparatus according to claim 8 or 9, wherein the image processing further comprises exposure compensation processing; and the processing unit is further configured to:
determine, based on a location that is of a first area in the first image frame and that is in the first image frame, a second area at a corresponding location in the event frame, wherein the first area is an image area in which an exposure status is abnormal in the first image frame, and the event frame is generated based on the event data within the specified time range; and
perform feature point compensation on the first area based on the feature point that is used to describe the object in the specified scene and that is comprised in the second area.

11. The apparatus according to any one of claims 8 to 10, wherein before separately performing the image processing on the plurality of image frames in the video stream based on the event data stream captured by the event camera, the processing unit is further configured to:
determine a central point of a plurality of feature points comprised in the first image frame, and determine a central point of a plurality of feature points comprised in a second image frame, wherein the second image frame is a previous image frame of the first image frame in the video stream;
determine an offset of the central point of the first image frame relative to the central point of the second image frame; and
determine that the offset of the center point is greater than an offset threshold.

12. The apparatus according to any one of claims 8 to 11, wherein the electronic terminal is further provided with an IMU, and before separately performing the image processing on the plurality of image frames in the video stream based on the event data stream captured by the event camera, the obtaining unit is further configured to obtain an acceleration value and a linear velocity value that are in the moving process of the electronic terminal and that are captured by the IMU; and
the processing unit is further configured to: determine that the acceleration value exceeds an acceleration threshold, and determine that the linear velocity value exceeds a linear velocity threshold.

13. The apparatus according to claim 10, wherein before performing the exposure compensation processing on the first image frame, the obtaining unit is further configured to obtain luminance of the plurality of image frames comprised in the video stream; and
the processing unit is further configured to: calculate average luminance of image frames that are captured before the first image frame in the plurality of image frames, and determine that a difference between luminance of the first image frame and the average luminance is greater than a first luminance threshold; or determine that a difference between luminance of the first image frame and luminance of a second image frame is greater than a second luminance threshold, wherein
the second image frame is a previous image frame of the first image frame in the video stream.

14. The apparatus according to any one of claims 8 to 13, wherein the processing unit is specifically configured to:
determine at least two key frames from the plurality of image frames comprised in the processed video stream, wherein a time difference between capturing times of two adjacent key frames in the at least two key frames is greater than a time threshold, and a quantity of feature points comprised in any key frame is greater than a quantity threshold; and
construct the three-dimensional map based on the at least two key frames.

15. A three-dimensional map construction apparatus, comprising a processor and a memory, wherein
the memory is configured to store a program; and
the processor is configured to execute the program stored in the memory, so that the apparatus implements the method according to any one of claims 1 to 7.

16. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 7.

17. A chip system, comprising a communication interface and a processor, wherein
the communication interface is configured to input and/or output signaling or data; and
the processor is configured to execute a computer-executable program, so that a device on which the chip system is installed performs the method according to any one of claims 1 to 7.

18. A computer program product, wherein when the computer program product runs on a computer, the computer is enabled to perform the method according to any one of claims 1 to 7.
